# NOUVEAU FASCICULE DE BREVET EUROPEEN

(11) **EP 2 880 126 B2**
(45) Date de publication et mention de la décision concernant l'opposition: **21.12.2022**
(45) Mention de la délivrance du brevet: 02.11.2016
(21) Numéro de dépôt: 13744731.4
(22) Date de dépôt: 11.07.2013
(51) Int. Cl.: C10G 3/00, C10G 45/60

(54) **PROCEDE D'HYDROTRAITEMENT ET D'HYDROISOMERISATION DE CHARGES ISSUES DE LA BIOMASSE DANS LEQUEL L'EFFLUENT A HYDROTRAITER ET LE FLUX D'HYDROGENE CONTIENNENT UNE TENEUR LIMITEE EN MONOXYDE DE CARBONE**
WASSERSTOFFBEHANDLUNGS- UND HYDROISOMERISATIONSVERFAHREN VON ROHSTOFFEN AUS BIOMASSE BEI WELCHEM DER ZU BEHANDELNDE AUSGANGSSTROM UND DER WASSERSTOFFSTROM EINE BEGRENZTE KOHLENMONOXIDKONZENTRATION ENTHALTEN
PROCESS FOR HYDROTREATMENT AND HYDROISOMERIZATION OF FEEDSTOCKS RESULTING FROM BIOMASS IN WHICH THE EFFLUENT TO BE HYDROTREATED AND THE HYDROGEN STREAM CONTAIN A LIMITED CARBON MONOXIDE CONTENT

(30) Priorité: 02.08.2012 FR 1202166
(43) Date de publication de la demande: 10.06.2015
(73) Titulaire: IFP Energies nouvelles, 92500 Rueil-Malmaison (FR)
(72) Inventeur: ARIBERT, Nicolas, F-38430 Moirans (FR); DUPASSIEUX, Nathalie, F-73100 Pugny-Chatenod (FR); CHAPUS, Thierry, F-69001 Lyon (FR)
(74) Mandataire: Plasseraud IP
(86) Numéro de dépôt international: PCT/FR2013/051660
(87) Numéro de publication internationale: WO 2014/020253

(56) Documents cités:
- WO-A1-2008/040973
- FR-A1- 2 910 017
- US-A1- 2009 193 709
- US-A1- 2009 300 971
- US-A1- 2010 061 927
- US-A1- 2010 270 207
- US-A1- 2011 015 454
- US-A1- 2011 166 396
- US-A1- 2012 017 496
- US-A1- 2012 165 581

## Description

### Domaine de l'invention

Dans un contexte international marqué par la croissance rapide en besoin de carburants, en particulier de bases gazoles et kérosènes dans la communauté européenne, la recherche de nouvelles sources d'énergie renouvelables pouvant être intégrées au schéma traditionnel du raffinage et de la production de carburants constitue un enjeu majeur.

A ce titre, l'intégration dans le processus de raffinage de nouveaux produits d'origine végétale, issus de la conversion de la biomasse lignocellulosique ou issus de la production d'huiles végétales ou de graisses animales a connu, ces dernières années, un très vif regain d'intérêt en raison de l'augmentation du coût des matières fossiles. De même, les biocarburants traditionnels (éthanol ou esters méthyliques d'huiles végétales principalement) ont acquis un réel statut de complément aux carburants de type pétroliers dans les pools carburants. En outre, les procédés connus à ce jour utilisant des huiles végétales ou des graisses animales sont à l'origine d'émissions de CO₂, connu pour ses effets négatifs sur l'environnement. Une meilleure utilisation de ces bio-ressources, comme par exemple leur intégration dans le pool carburant présenterait donc un avantage certain.

La forte demande en carburants gazoles et kérosènes couplée avec l'importance des préoccupations liées à l'environnement renforce l'intérêt d'utiliser des charges issues de sources renouvelables, encore appelées charges biosourcées. Parmi ces charges, on peut citer par exemple les huiles végétales, les graisses animales, brutes ou ayant subi un traitement préalable, ainsi que les mélanges de telles charges. Ces charges contiennent notamment des structures chimiques de type triglycérides ou esters ou acides gras, la structure et la longueur de chaîne hydrocarbonée de ces derniers étant compatibles avec les hydrocarbures présents dans les gazoles et le kérosène.

Une voie possible est la transformation catalytique de la charge issue de source renouvelable en carburant paraffinique désoxygéné en présence d'hydrogène (hydrotraitement). Un des inconvénients majeurs des hydrotraitements d'huiles végétales provient de leur forte consommation en hydrogène. Selon la nature des huiles, celle-ci peut dépasser les 3% poids par rapport à la charge. Or, la nouvelle directive européenne 2009/28/CE insiste sur les "critères de durabilité" des ressources énergétiques avec notamment un axe majeur sur "la réduction des émissions de gaz à effet de serre résultant de l'utilisation de biocarburants et bioliquides qui doit être d'au moins 35% (50% en 2017 et 60% en 2018)".

Pour pallier cet inconvénient, plusieurs solutions ont été proposées dans l'état de l'art parmi lesquelles le recyclage dans l'étape d'hydrotraitement de l'hydrogène non converti pendant ladite étape d'hydrotraitement. Cependant, lors de l'hydrotraitement de charge issue de source renouvelable, les réactions de décarboxylation/décarbonylation des composés d'acides gras conduisent à la formation de gaz tels que le dioxyde de carbone CO₂, le méthane CH₄, et le monoxyde de carbone CO mélangés à l'hydrogène non converti. Or, le monoxyde de carbone CO peut avoir un impact négatif sur l'activité hydrodésoxygénante du catalyseur.

Le brevet US2009/0300971 décrit un procédé de préparation de naphta à partir d'une charge issue de source renouvelable comprenant une étape d'hydrotraitement, une étape de séparation gaz/liquide, suivie d'une étape d'hydroisomérisation. L'hydrogène recyclé dans l'étape d'hydrotraitement et/ou d'hydroisomérisation peut éventuellement être purifié de manière à séparer l'ammoniaque, les oxydes de carbones et le sulfure d'hydrogène avant d'être envoyé dans lesdites étapes d'hydrotraitement et d'hydroisomérisation. Il est indiqué que l'élimination préalable des contaminants présents dans le flux d'hydrogène préserve l'activité catalytique et la sélectivité des catalyseurs d'hydrotraitement et d'hydroisomérisation. Cependant, aucune indication précise sur la pureté de l'hydrogène employé dans l'étape d'hydroisomérisation n'est mentionnée.

Le brevet US 7, 982, 075 décrit un procédé de préparation de diesel à partir d'une charge issue de source renouvelable comprenant une étape d'hydrotraitement, une étape de séparation gaz/liquide suivie d'une étape d'hydroisomérisation. La première étape est réalisée avec une injection d'H₂S afin de favoriser la formation de paraffines impaires et donc de CO et CO₂. L'effluent liquide produit doit être totalement exempt d'eau, de CO, de CO₂ ou d'autre impureté pour ne pas pénaliser l'activité en isomérisation. Les gaz issus de cette première étape peuvent subir plusieurs traitements afin d'éliminer les hydrocarbures légers, l'ammoniaque, et le CO₂. Dans le cas où le gaz issu de la première étape présente des teneurs en oxyde de carbone suffisamment basses, celui-ci peut alors être recyclé vers la section d'hydrotraitement. Cependant, aucune indication précise sur la pureté de l'hydrogène employé dans l'étape d'hydrotraitement n'est mentionnée.

La demande WO 2006/100584 décrit un procédé de préparation de coupe gazole et naphta à partir d'une charge issue de source renouvelable comprenant une étape d'hydrotraitement et d'hydroisomérisation au sein d'un même réacteur, une étape de séparation gaz/liquide suivie d'une étape de fractionnement naphta/gazole. Le gaz issu de la séparation gaz liquide subit une première purification afin d'éliminer les composés légers par une membrane sélective ou un PSA (Pressure Swing Adsorption selon la terminologie anglo-saxonne). L'hydrogène séparé des autres sous-produits peut alors être recyclé vers l'étape d'hydrotraitement et d'hydroisomérisation.

Le brevet US 2011/166396 décrit un procédé de production de diesel à partir d'une charge renouvelable contenant des triglycérides ou des acides gras et un hydrocarbure fossile par hydrotraitement sur un catalyseur Mo/support, séparation de la fraction gazeuse de l'effluent hydrotraité, purification de cette fraction gazeuse pour éliminer H2S, NH3, CO, CO₂, et les hydrocarbures légers, recyclage du gaz purifié dans l'étape d'hydrotraitement et hydroisomérisation catalytique de l'effluent liquide hydrotraité.

Ainsi, le plus souvent, la fraction gazeuse est séparée de l'effluent sortant du réacteur d'hydrotraitement, puis réinjectée dans le réacteur après passage dans un système de traitement pour en éliminer les gaz tels que le CO.

L'élimination du CO des gaz ou la réduction de sa teneur à des quantités très basses nécessite la mise en œuvre de systèmes de traitement complexes et onéreux. De plus, la présence de tels systèmes de traitement fait chuter le rendement en hydrogène recyclé (jusqu'à 25% de perte d'hydrogène avec un traitement par PSA). Il existe donc toujours un besoin de fournir des procédés plus économiques et plus performants.

La demanderesse, dans ses recherches a mis au point un procédé permettant le recyclage de l'hydrogène sans étape préalable de purification dudit hydrogène recyclé.

La présente invention propose un procédé de production de distillats moyens à partir d'une charge comprenant au moins une fraction de charge issue d'une source renouvelable comprenant au moins : a) une étape d'hydrotraitement de ladite charge en présence d'un catalyseur en lit fixe, dans des conditions déterminées, b) une étape de séparation d'au moins une partie de l'effluent issu de l'étape a) en au moins une fraction gazeuse et au moins un effluent liquide hydrocarboné, c) une étape d'hydroisomérisation d'au moins une partie de l'effluent liquide hydrocarboné séparé de l'étape b), en présence d'un catalyseur d'hydroisomérisation en lit fixe, d) une étape de fractionnement de l'effluent issu de l'étape c) pour obtenir au moins une fraction distillat moyen, procédé dans lequel on renvoie dans l'étape a) au moins une partie de la fraction gazeuse séparée à l'étape b), ladite fraction gazeuse renvoyée dans l'étape a) comprenant une teneur en CO comprise entre 0,5% et 3 % volume.

### Description détaillée de l'invention

La présente invention est dédiée à la préparation de bases carburant gazole et/ou kérosène correspondant aux nouvelles normes environnementales, à partir d'une charge comprenant au moins une fraction de charge issue de sources renouvelables.

La présente invention concerne un procédé de production de distillats moyens à partir d'une charge comprenant au moins une fraction de charge issue d'une source renouvelable comprenant au moins: a) une étape d'hydrotraitement dans laquelle ladite charge est mise en contact avec un catalyseur d'hydrotraitement en lit fixe, ledit catalyseur comprenant une fonction hydro-déshydrogénante et un support amorphe, à une température comprise entre 200 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 70 et 1000 Nm³ d'hydrogène/m³ de charge, b) une étape de séparation d'au moins une partie de l'effluent issu de l'étape a) en au moins une fraction gazeuse comprenant de l'hydrogène, au moins du CO et du CO₂ et les composés C4⁻, et au moins un effluent liquide hydrocarboné, c) une étape d'hydroisomérisation d'au moins une partie de l'effluent liquide hydrocarboné séparé de l'étape b), en présence d'un catalyseur d'hydroisomérisation en lit fixe, d) une étape de fractionnement de l'effluent issu de l'étape c) pour obtenir au moins une fraction distillat moyen, dans lequel on renvoie dans l'étape a) au moins une partie de la fraction gazeuse séparée à l'étape b), ladite fraction gazeuse renvoyée dans l'étape a) comprenant une teneur en CO comprise entre 0,5% et 3 % volume, dans lequel la fraction gazeuse séparée à l'étape b) est recyclée à l'étape a) en même temps qu'un appoint d'hydrogène frais, et dans lequel la fraction gazeuse totale recyclée combinée à l'appoint d'hydrogène frais comprend une teneur en CO comprise entre 0,5% et 3 % volume.

La fraction gazeuse renvoyée dans l'étape a) contient une teneur en CO comprise entre 0,5% et 3 % volume, de manière plus préférée entre 0,5% et 2,5 % volume, de manière encore plus préférée entre 0,5% et 2 % volume, de manière très préférée entre 0,5% et 1,5 % volume.

Avantageusement selon l'invention, la fraction gazeuse séparée de l'étape b) est soumise à une étape de purification du CO₂ avant d'être recyclée dans l'étape a) d'hydrotraitement.

La mise en œuvre du procédé selon l'invention présente l'avantage de pallier les problèmes liés à la forte consommation d'hydrogène dans l'hydrotraitement des charges comprenant au moins une fraction de charge issue d'une source renouvelable. Le procédé selon l'invention permet l'économie de coûts liés à la mise en œuvre de systèmes de purification de l'hydrogène recyclé dans l'étape d'hydrotraitement. Par ailleurs, en évitant la mise en œuvre de tels systèmes de purification, la présente invention présente l'avantage d'augmenter le rendement de recyclage de l'hydrogène.

### Charge

La charge selon l'invention, comprend au moins une fraction de charge issue d'une source renouvelable. Une charge issue de source renouvelable encore appelée charge biosourcée est entendue dans le cadre de la présente invention comme étant une charge comprenant avantageusement au moins des huiles et graisses d'origine végétale ou animale, ou des mélanges de telles charges, contenant des triglycérides et/ou des acides gras libres et/ou des esters. Les huiles végétales peuvent avantageusement être brutes ou raffinées, totalement ou en partie, et issues des végétaux suivants : colza, tournesol, soja, palme, palmiste, olive, noix de coco, jatropha, cette liste n'étant pas limitative. Les huiles d'algues ou de poisson sont également pertinentes. Les graisses animales sont avantageusement choisies parmi le lard ou les graisses composées de résidus de l'industrie alimentaire ou issus des industries de la restauration.

Ces charges contiennent essentiellement des structures chimiques de type triglycérides que l'homme du métier connait également sous l'appellation tri ester d'acides gras ainsi que des acides gras libres. Un tri ester d'acide gras est ainsi composé de trois chaînes d'acides gras. Ces chaînes d'acide gras sous forme de tri ester ou sous forme d'acide gras libres, possèdent un nombre d'insaturations par chaîne, également appelé nombre de doubles liaisons carbone carbone par chaîne, généralement compris entre 0 et 3 mais qui peut être plus élevé notamment pour les huiles issues d'algues qui présentent généralement un nombre d'insaturations par chaînes de 5 à 6.

Les molécules présentes dans les charges issues de sources renouvelables utilisées dans la présente invention présentent donc un nombre d'insaturations, exprimé par molécule de triglycéride, avantageusement compris entre 0 et 18. Dans ces charges, le taux d'insaturation, exprimé en nombre d'insaturations par chaîne grasse hydrocarbonée, est avantageusement compris entre 0 et 6.

Les charges issues de sources renouvelables comportent également différentes impuretés et notamment des hétéroatomes tels que l'azote. Les teneurs en azote dans les huiles végétales sont généralement comprises entre 1 ppm et 100 ppm poids environ, selon leur nature.

La charge selon l'invention peut comprendre en outre au moins une fraction de charge hydrocarbonée ("co-processing" selon la terminologie anglo-saxonne). Ladite charge hydrocarbonée est entendue dans le cadre de la présente invention comme étant une fraction de charge pouvant avantageusement contenir au moins du charbon, du coke de pétrole (petcoke selon la terminologie anglo-saxonne), du gaz naturel, des résidus pétroliers, des pétroles bruts, des pétroles bruts étêtés, des huiles désasphaltées, des asphaltes de désasphaltage, des dérivés de procédés de conversion du pétrole (comme par exemple : HCO, slurry de FCC, GO lourd/VGO de coking, résidu de viscoréduction ou procédé thermique similaires, etc....), des sables bitumeux ou leurs dérivés, des gaz de schistes et des schistes bitumeux ou leurs dérivés. Selon le procédé de l'invention, ladite fraction de charge hydrocarbonée peut être une fraction de charge hydrocarbonée gazeuse, solide, liquide ou leur mélange.

Avantageusement, la charge utilisée dans le procédé de l'invention comprend au moins 20%, de préférence au moins 50%, de manière plus préférée au moins 70%, et de manière très préférée au moins 90% de fraction de charge issue d'une source renouvelable.

Dans un mode de réalisation préféré, la charge subit, préalablement à l'étape a) du procédé selon l'invention, une étape de pré-traitement ou pré-raffinage de façon à éliminer, par un traitement approprié, des contaminants tels que des métaux et des composés alcalins par exemple sur des résines échangeuses d'ions, les alcalino-terreux et le phosphore. Des traitements appropriés peuvent par exemple être des traitements thermiques et/ou chimiques bien connus de l'homme du métier.

### Etape a) d'hydrotraitement

Conformément à l'étape a) du procédé selon l'invention, la charge, éventuellement prétraitée, est mise au contact d'un catalyseur en lit fixe à une température comprise entre 200 et 450°C, de préférence entre 220 et 350°C, de manière préférée entre 220 et 320°C, et de manière encore plus préférée entre 220 et 310°C. La pression est comprise entre 1 MPa et 10 MPa, de manière préférée entre 1 MPa et 6 MPa et de manière encore plus préférée entre 1 MPa et 4 MPa. La vitesse spatiale horaire, soit le volume de charge par volume de catalyseur et par heure est comprise entre 0,1 h⁻¹ et 10 h⁻¹. La charge est mise au contact du catalyseur en présence d'hydrogène. La quantité totale d'hydrogène mélangée à la charge est telle que le ratio hydrogène/charge est compris entre 70 et 1000 Nm³ d'hydrogène/m³ de charge et de manière préférée compris entre 150 et 750 Nm³ d'hydrogène/m³ de charge.

Dans l'étape a) du procédé selon l'invention, le catalyseur en lit fixe est avantageusement un catalyseur d'hydrotraitement comprenant une fonction hydro-déshydrogénante comprenant au moins un métal du groupe VIII et/ou du groupe VIB, pris seul ou en mélange et un support choisi dans le groupe formé par l'alumine, la silice, les silices-alumines, la magnésie, les argiles et les mélanges d'au moins deux de ces minéraux. Ce support peut également avantageusement renfermer d'autres composés et par exemple des oxydes choisis dans le groupe formé par l'oxyde de bore, la zircone, l'oxyde de titane, l'anhydride phosphorique. Le support préféré est un support d'alumine et de manière très préférée d'alumine η, δ ou y.

Ledit catalyseur est avantageusement un catalyseur comprenant des métaux du groupe VIII de préférence choisis parmi le nickel et le cobalt, pris seul ou en mélange, de préférence en association avec au moins un métal du groupe VIB de préférence choisi parmi le molybdène et le tungstène, pris seul ou en mélange.

La teneur en oxydes de métaux des groupes VIII et de préférence en oxyde de nickel est avantageusement comprise entre 0,5 et 10% en poids d'oxyde de nickel (NiO) et de préférence entre 1 et 5% en poids d'oxyde de nickel et la teneur en oxydes de métaux des groupes VIB, de préférence en trioxyde de molybdène (MoO₃), est avantageusement comprise entre 1 et 30% en poids, de préférence de 5 à 25% en poids, les pourcentages étant exprimés en pourcentage poids par rapport à la masse totale du catalyseur.

La teneur totale en oxydes de métaux des groupes VIB et VIII dans le catalyseur utilisé dans l'étape a) est avantageusement comprise entre 5 et 40% en poids et de manière préférée comprise entre 6 et 30% en poids par rapport à la masse totale du catalyseur.

Ledit catalyseur utilisé dans l'étape a) du procédé selon l'invention est avantageusement caractérisé par un fort pouvoir hydrogénant de façon à orienter le plus possible la sélectivité de la réaction vers une hydrogénation conservant le nombre d'atomes de carbone des chaînes grasses c'est-à-dire la voie hydrodéoxygénation, ceci afin de maximiser le rendement en hydrocarbures entrant dans le domaine de distillation des kérosènes et/ou des gazoles. Avantageusement, on opère à une température relativement basse. Maximiser la fonction hydrogénante permet également de limiter les réactions de polymérisation et/ou de condensation conduisant à la formation de coke qui dégraderait la stabilité des performances catalytiques. De façon préférée on utilise un catalyseur de type Ni ou NiMo.

Ledit catalyseur utilisé dans l'étape a) d'hydrotraitement du procédé selon l'invention peut également avantageusement contenir un élément dopant choisi parmi le phosphore et le bore, pris seuls ou en mélange. Ledit élément dopant peut être introduit dans la matrice ou de préférence être déposé sur le support. On peut également déposer du silicium sur le support, seul ou avec le phosphore et/ou le bore et/ou le fluor. La teneur en poids d'oxyde dudit élément dopant est avantageusement inférieure à 20% et de manière préférée inférieure à 10% et elle est avantageusement d'au moins 0,001%.

Des catalyseurs préférés sont les catalyseurs décrits dans la demande de brevet FR 2 943 071 décrivant des catalyseurs ayant une forte sélectivité pour les réactions d'hydrodésoxygénation.

D'autres catalyseurs préférés sont les catalyseurs décrits dans la demande de brevet EP 2 210 663 décrivant des catalyseurs supportés ou massiques comprenant une phase active constituée d'un élément sulfuré du groupe VIB, l'élément du groupe VIB étant le molybdène.

Les métaux des catalyseurs utilisés dans l'étape a) d'hydrotraitement du procédé selon l'invention sont des métaux sulfurés ou des phases métalliques et de préférence des métaux sulfurés.

On ne sortirait pas du cadre de la présente invention en utilisant dans l'étape a) du procédé selon l'invention, de manière simultanée ou de manière successive, un seul catalyseur ou plusieurs catalyseurs différents. Cette étape peut être effectuée industriellement dans un ou plusieurs réacteurs avec un ou plusieurs lits catalytiques et de préférence à courant descendant de liquide.

### Etape b) de séparation gaz/liquide de l'effluent issu de l'étape a)

Conformément à l'étape b) du procédé selon l'invention, une étape de séparation d'au moins une partie et de préférence la totalité de l'effluent issu de l'étape a) est mise œuvre. L'étape b) du procédé selon l'invention permet de séparer l'effluent issu de l'étape a) en au moins une fraction gazeuse comprenant essentiellement de l'hydrogène et au moins un effluent liquide hydrocarboné.

Selon l'invention, ladite fraction gazeuse comprend l'hydrogène non converti, les gaz contenant au moins un atome d'oxygène et les composés C4⁻. Lesdits gaz sont essentiellement issus de la décomposition des composés oxygénés lors de l'étape d'hydrotraitement.

Selon l'invention, on entend par gaz contenant au moins un atome d'oxygène, le gaz contenant au moins du CO et du CO₂.

Selon l'invention, on entend par composés C4⁻, les composés C1 à C4 présentant de préférence un point d'ébullition final inférieur à 20°C.

Selon l'invention, la fraction gazeuse issue de l'étape b) est avantageusement soumise à une étape de purification du CO₂ avant d'être recyclée dans l'étape a) d'hydrotraitement. Ladite étape de purification du CO₂ est avantageusement réalisée par lavage de ladite fraction gazeuse aux amines ou toute technique connue de l'homme du métier.

L'étape b) selon l'invention permet de séparer les gaz du liquide, et notamment de récupérer au moins une fraction gazeuse riche en hydrogène et contenant du CO et les composés C4⁻ d'une part et au moins un effluent hydrocarboné liquide d'autre part.

Selon l'invention, au moins une partie, de préférence la totalité de la fraction gazeuse séparée de l'étape b) est recyclée à l'étape a). Selon l'invention, la fraction gazeuse séparée à l'étape b) et recyclée à l'étape a) comprend une teneur en CO comprise entre 0,5% et 3 % volume, de manière encore plus préférée entre 0,5% et 2,5 % volume, de manière très préférée entre 0,5% et 2 % volume. Dans une variante très préférée du procédé, ladite teneur en CO dans ladite fraction gazeuse recyclée à l'étape a) est comprise entre 0,5% et 1,5 % volume.

Selon l'invention, ladite fraction gazeuse séparée à l'étape b) est recyclée à l'étape a) en même temps qu'un appoint d'hydrogène frais. Selon l'invention, la fraction gazeuse totale recyclée combinée à l'appoint d'hydrogène frais comprend une teneur en CO comprise entre 0,5% et 3 % volume, de manière encore plus préférée entre 0,5% et 2,5 % volume, de manière très préférée entre 0,5% et 2 % volume. Dans une variante très préférée du procédé, ladite teneur en CO dans ladite fraction gazeuse recyclée à l'étape a) est comprise entre 0,5% et 1,5 % volume.

Sans vouloir se lier à une quelconque théorie, il semblerait, en dehors des conditions spécifiques de l'étape d'hydrotraitement selon l'invention, que la tolérance de la présence de CO à des teneurs allant jusqu'à 3% volume puisse être liée à l'équilibre de la réaction de conversion du monoxyde de carbone à la vapeur (Water-Gas-Shift selon la terminologie anglo-saxonne) qui produit de l'hydrogène par consommation du monoxyde de carbone (CO) et de l'eau issue de la réaction d'hydrotraitement de la charge végétale.

L'effluent liquide hydrocarboné séparé à l'étape b) présente de préférence une teneur en soufre inférieure à 10 ppm poids, une teneur en azote inférieure à 2 ppm poids.

L'étape b) de séparation peut avantageusement être mise en œuvre par toute méthode connue de l'homme du métier telle que par exemple la combinaison de un ou plusieurs séparateurs haute et/ou basse pression, et/ou d'étapes de distillation et/ou de strippage haute et/ou basse pression.

### Etape c) d'hydroisomérisation de l'effluent liquide hydrocarboné

Conformément à l'étape c) du procédé selon l'invention, au moins une partie, de préférence la totalité de l'effluent liquide hydrocarboné issu de l'étape b) du procédé selon l'invention est hydroisomérisée en présence d'un catalyseur d'hydroisomérisation en lit fixe, ladite étape d'hydroisomérisation étant réalisée à une température comprise entre 150 et 500°C, une pression comprise entre 1 MPa et 10 MPa, une vitesse spatiale horaire comprise entre 0,1 et 10 h⁻¹, en présence d'une quantité totale d'hydrogène mélangée à la charge telle que le ratio hydrogène/charge soit compris entre 70 et 1000 Nm³/m³ de charge et en présence d'hydrogène.

Selon l'invention, l'hydrogène utilisé à l'étape c) est avantageusement généré par les procédés connus de l'homme du métier tels que par exemple un procédé de reformage catalytique ou de craquage catalytique des gaz.

Selon la nature des différentes sources, l'hydrogène utilisé à l'étape c) dans le procédé selon l'invention peut contenir ou non des impuretés. La teneur en oxygène atomique dans ledit flux d'hydrogène peut être mesurée par toute méthode connue de l'homme du métier telle que par exemple par chromatographie en phase gazeuse.

De préférence, l'hydrogène utilisé à l'étape c) peut être de l'hydrogène frais ou de l'hydrogène de recyclage c'est-à-dire d'hydrogène non converti lors de l'étape c) d'hydroisomérisation et séparé à l'étape de fractionnement d) ou leur mélange.

De préférence, l'hydrogène utilisé à l'étape c) est soumise à une étape de purification pour en éliminer les composés oxygénés tels que le CO et le CO₂. Ladite étape de purification de l'hydrogène utilisé à l'étape c) peut avantageusement s'effectuer selon toute méthode connue de l'homme du métier.

De préférence, ladite étape de purification est avantageusement mise en œuvre selon les méthodes d'adsorption modulée en pression ou PSA (Pressure Swing Adsorption selon la terminologie anglo-saxonne), ou d'adsorption modulée en température ou TSA (Temperature Swing Adsorption selon la terminologie anglo-saxonne), de lavage aux amines, de méthanation, d'oxydation préférentielle, de procédés membranaires, utilisées seules ou combinées.

Lorsque le procédé met en œuvre un recyclage de l'hydrogène non converti lors de l'étape c) d'hydroisomérisation et séparé à l'étape de fractionnement d) (l'hydrogène de recyclage), une purge dudit hydrogène de recyclage peut avantageusement être effectuée afin de limiter l'accumulation de molécules contenant au moins un atome d'oxygène tel que le CO ou le CO₂ et ainsi de limiter la teneur en oxygène atomique dans ledit flux d'hydrogène.

Dans un autre mode de réalisation de l'invention, l'hydrogène utilisé à l'étape c) provient d'au moins une partie de la fraction gazeuse séparée à l'étape b).

Les conditions opératoires de l'étape d'hydroisomérisation sont ajustées afin de réaliser une hydroisomérisation de la charge non convertissante. Cela signifie que l'hydroisomérisation s'effectue avec une conversion de la fraction 150°C⁺ en fraction 150°C⁻ inférieure à 20% en poids, de manière préférée inférieure à 10% en poids et de manière très préférée inférieure à 5% en poids.

Avantageusement, l'étape c) d'hydroisomérisation du procédé selon l'invention opère à une température comprise entre 150°C et 450°C, et de manière très préférée, entre 200 et 450°C, à une pression comprise entre 2 MPa et 10 MPa et de manière très préférée, entre 1 MPa et 9 MPa, à une vitesse volumique horaire avantageusement comprise entre 0,2 et 7 h⁻¹ et de manière très préférée, entre 0,5 et 5 h⁻¹, à un débit d'hydrogène tel que le rapport volumique hydrogène/hydrocarbures est avantageusement compris entre 100 et 1000 normaux m³ d'hydrogène par m³ de charge et de manière préférée entre 150 et 1000 normaux m³ d'hydrogène par m³ de charge.

Le catalyseur d'hydroisomérisation comprend au moins un métal hydro-déshydrogénant choisi dans le groupe formé par les métaux du groupe VIB et du groupe VIII de la classification périodique et au moins un solide acide de Bronsted, et éventuellement un liant.

De préférence, le catalyseur d'hydroisomérisation comprend soit au moins un métal noble du groupe VIII choisi parmi le platine et le palladium, pris seul ou en mélange, actifs sous leur forme réduite, soit au moins un métal non noble du groupe VIII choisi parmi le nickel et le cobalt en combinaison avec au moins un métal du groupe VI choisi parmi le molybdène et le tungstène, pris seul ou en mélange, et utilisés de préférence sous leur forme sulfurée.

Dans le cas où le catalyseur d'hydroisomérisation comprend au moins un métal noble du groupe VIII, la teneur en métal noble dudit catalyseur d'hydroisomérisation est avantageusement comprise entre 0,01 et 5% en poids par rapport au catalyseur fini, de manière préférée entre 0,05 et 4% en poids et de manière très préférée entre 0,10 et 2% en poids.

Dans le cas où le catalyseur d'hydroisomérisation comprend au moins un métal du groupe VI en combinaison avec au moins un métal non noble du groupe VIII, la teneur en métal du groupe VI dudit troisième catalyseur d'hydroisomérisation, est avantageusement comprise en équivalent oxyde entre 5 et 40% en poids par rapport au catalyseur fini, de manière préférée entre 10 et 35% en poids et de manière très préférée entre 15 et 30% en poids et la teneur en métal du groupe VIII dudit catalyseur est avantageusement comprise en équivalent oxyde entre 0,5 et 10% en poids par rapport au catalyseur fini, de manière préférée entre 1 et 8% en poids et de manière très préférée entre 1,5 et 6% en poids.

La fonction métallique est avantageusement introduite sur le catalyseur par toute méthode connue de l'homme du métier, comme par exemple le comalaxage, l'imprégnation à sec ou l'imprégnation par échange. De préférence, le solide acide de Bronsted est constitué par de la silice alumine ou la zéolithe Y, la SAPO-11, la SAPO-41, la ZSM-22, la ferrierite, la ZSM-23, la ZSM-48, la ZBM-30, l'IZM-1, la COK-7. Éventuellement, un liant peut avantageusement également être utilisé durant l'étape de mise en forme du support. On utilise de préférence un liant lorsque la zéolithe est employée.

Ledit liant est avantageusement choisi parmi la silice (SiO₂), l'alumine (Al₂O₃), les argiles, l'oxyde de titane (TiO₂), l'oxyde de bore (B₂O₃) et la zircone (ZrO₂) pris seul ou en mélange. De préférence, ledit liant est choisi parmi la silice et l'alumine et de manière encore plus préférée, ledit liant est l'alumine sous toutes ses formes connues de l'homme du métier, telle que par exemple l'alumine gamma.

Un catalyseur d'hydroisomérisation préféré utilisé dans le procédé selon l'invention comporte avantageusement au moins un métal noble, ledit métal noble étant le platine et un solide acide de Bronsted de type silice alumine, sans aucun liant. La teneur en silice de la silice-alumine, exprimée en pourcentage poids, est généralement comprise entre 1 et 95%, avantageusement entre 5 et 95% et de manière préférée entre 10 et 80% et de manière encore plus préférée entre 20 et 70% et entre 22 et 45%. Cette teneur en silice est parfaitement mesurée à l'aide de la fluorescence X.

Plusieurs catalyseurs préférés utilisés dans l'étape c) d'hydroisomérisation du procédé selon l'invention sont décrits ci-après.

Un catalyseur préféré utilisé dans le procédé selon l'invention, comprend une silice-alumine particulière. Plus précisément, ledit catalyseur comprend (et de préférence est essentiellement constitué de) 0,05 à 10% en poids et de préférence comprise entre 0,1 et 5% poids d'au moins un métal noble du groupe VIII, de préférence choisis parmi le platine et le palladium et de manière préféré, ledit métal noble étant le platine, déposé sur un support silice-alumine, sans aucun liant, contenant une quantité de silice (SiO2) comprise entre 1 et 95%, exprimée en pourcentage poids, de préférence entre 5 et 95%, de manière préférée entre 10 et 80% et de manière très préférée entre 20 et 70% et de manière encore plus préférée entre 22 et 45%, ledit catalyseur présentant :
- une surface spécifique BET de 100 à 500 m²/g, de préférence comprise entre 200 m²/g et 450 m²/g et de manière très préférée entre 250 m²/g et 450 m²/g,
- un diamètre moyen des mésopores compris entre 3 et 12 nm, de préférence compris entre 3 nm et 11 nm et de manière très préférée entre 4 nm et 10,5 nm,
- un volume poreux des pores dont le diamètre est compris entre le diamètre moyen tel que défini précédemment diminué de 3 nm et le diamètre moyen tel que défini précédemment augmenté de 3 nm est supérieur à 40% du volume poreux total, de manière préférée compris entre 50% et 90% du volume poreux total et de manière très préférée compris entre 50% et 70% du volume poreux total,
- un volume poreux total compris entre 0,4 et 1,2 ml/g, de préférence entre 0,5 et 1,0 ml/g et de manière très préférée entre 0,5 et 0,9 ml/g,
- une teneur en composés alcalins ou alcalino-terreux inférieure à 300 ppm poids et de préférence inférieure à 200 ppm poids.

Le diamètre moyen des mésopores est défini comme étant le diamètre correspondant à l'annulation de la courbe dérivée du volume d'intrusion du mercure obtenue à partir de la courbe de porosité au mercure pour des diamètres de pores compris entre 2 et 50 m. Le diamètre moyen des mésopores du catalyseur est avantageusement mesuré à partir du profil de répartition poreuse obtenu à l'aide d'un porosimètre au mercure.

De préférence, la dispersion du métal dudit catalyseur préféré est avantageusement comprise entre 20% et 100%, de manière préférée entre 30% et 100% et de manière très préférée entre 40 et 100%. La dispersion, représentant la fraction de métal accessible au réactif par rapport à la quantité totale de métal du catalyseur, est avantageusement mesurée, par exemple, par titrage H₂/O₂ ou par microscopie électronique à transmission.

De préférence, le coefficient de répartition du métal noble dudit catalyseur préféré est supérieur à 0,1, de préférence supérieur à 0,2 et de manière très préférée supérieur à 0,4. La répartition du métal noble représente la distribution du métal à l'intérieur du grain de catalyseur, le métal pouvant être bien ou mal dispersé. Ainsi, il est possible d'obtenir le platine mal réparti (par exemple détecté dans une couronne dont l'épaisseur est nettement inférieure au rayon du grain) mais bien dispersé c'est-à-dire que tous les atomes de platine, situés en couronne, seront accessibles aux réactifs. Le coefficient de répartition du métal noble peut être mesuré par microsonde de Castaing.

Le sel de métal noble est avantageusement introduit par une des méthodes usuelles utilisées pour déposer le métal à la surface d'un solide. Une des méthodes préférées est l'imprégnation à sec qui consiste en l'introduction du sel de métal dans un volume de solution qui est égal au volume poreux de la masse de solide à imprégner. Avant l'opération de réduction, le catalyseur peut avantageusement subir une calcination comme par exemple un traitement sous air sec à une température de 300 à 750°C et de préférence à une température égale à 520°C, pendant 0,25 à 10 heures et de préférence pendant 2 heures.

Un autre catalyseur préféré dans le procédé selon l'invention comprend une seconde silice-alumine particulière. Plus précisément, ledit catalyseur comprend au moins un élément hydro-déshydrogénant choisi dans le groupe formé par les éléments du groupe VIB et du groupe VIII de la classification périodique, de 0,01 à 5,5% poids d'oxyde d'un élément dopant choisi parmi le phosphore, le bore et le silicium et un support non zéolithique à base de silice - alumine contenant une quantité supérieure à 5% poids et inférieure ou égale à 95% poids de silice (SiO₂), ledit catalyseur présentant les caractéristiques suivantes :
- un diamètre moyen mésoporeux, mesuré par porosimétrie au mercure, compris entre 2 et 14 nm,
- un volume poreux total, mesuré par porosimétrie au mercure, compris entre 0,1 ml/g et 0,5 ml/g,
- un volume poreux total, mesuré par porosimétrie azote, compris entre 0,1 ml/g et 0,5 ml/g,
- une surface spécifique BET comprise entre 100 et 550 m²/g,
- un volume poreux, mesuré par porosimétrie au mercure, compris dans les pores de diamètre supérieur à 14 nm inférieur à 0,1 ml/g,
- un volume poreux, mesuré par porosimétrie au mercure, compris dans les pores de diamètre supérieur à 16 nm inférieur à 0,1 ml/g,
- un volume poreux, mesuré par porosimétrie au mercure, compris dans les pores de diamètre supérieurs à 20 nm, inférieur à 0,1 ml/g,
- un volume poreux, mesuré par porosimétrie au mercure, compris dans les pores de diamètre supérieurs à 50 nm inférieur à 0,1 ml/g,
- un diagramme de diffraction X qui contient au moins les raies principales caractéristiques d'au moins une des alumines de transition comprise dans le groupe composé par les alumines alpha, rhô, chi, eta, gamma, kappa, thêta et delta,
- une densité de remplissage tassée supérieure à 0,75 g/ml.

Un autre catalyseur préféré utilisé dans le procédé selon l'invention comprend (et de préférence est essentiellement constitué de) 0,05 à 10% en poids et de préférence 0,1 et 5% poids d'au moins un métal noble du groupe VIII, de préférence choisis parmi le platine et le palladium et de manière préférée, ledit métal noble étant le platine, déposé sur un support silice-alumine, sans aucun liant, contenant une quantité de silice (SiO₂) comprise entre 1 et 95%, exprimée en pourcentage poids, de préférence entre 5 et 95%, de manière préférée entre 10 et 80% et de manière très préférée entre 20 et 70% et de manière encore plus préférée entre 22 et 45%, ledit catalyseur présentant :
- une surface spécifique BET de 200 à 600 m²/g et de préférence comprise entre 250 m²/g et 500 m²/g,
- un diamètre moyen des mésopores compris entre 3 et 12 nm, de préférence compris entre 3 nm et 11 nm et de manière très préférée entre 4 nm et 10,5 nm,
- un volume poreux des pores dont le diamètre est compris entre le diamètre moyen tel que défini précédemment diminué de 3 nm et le diamètre moyen tel que défini précédemment augmenté de 3 nm est supérieur à 60% du volume poreux total, de manière préférée supérieur à 70% du volume poreux total et de manière très préférée supérieur à 80% du volume poreux total,
- un volume poreux total inférieur à 1 ml/g, de préférence compris entre 0,1 et 0,9 ml/g et de manière très préférée entre 0,2 et 0,7 ml/g,
- une teneur en composés alcalins ou alcalino-terreux inférieure à 300 ppm poids et de préférence inférieure à 200 ppm poids.

De préférence, la dispersion du métal noble dudit catalyseur préféré utilisé dans l'étape d) du procédé selon l'invention est avantageusement comprise entre 20% et 100%, de manière préférée entre 30% et 100% et de manière très préférée entre 40 et 100%.

De préférence, le coefficient de répartition du métal noble dudit catalyseur préféré utilisé dans l'étape c) du procédé selon l'invention est supérieur à 0,1, de préférence supérieur à 0,2 et de manière très préférée supérieur à 0,4. Ce coefficient de répartition est mesuré par microsonde de Castaing.

Un autre catalyseur préféré utilisé dans le procédé selon l'invention comprend une silice-alumine et au moins un métal du groupe VIIIB et au moins un métal du groupe VIB, ledit catalyseur étant sulfuré. La teneur en ces éléments est avantageusement comprise, en équivalent oxyde, entre 5 et 40 % en poids par rapport au catalyseur fini, de manière préférée entre 10 et 35 % en poids et de manière très préférée entre 15 et 30 % en poids et la teneur en métal du groupe VIII dudit catalyseur est avantageusement comprise, en équivalent oxyde, entre 0,5 et 10 % en poids par rapport au catalyseur fini, de manière préférée entre 1 et 8 % en poids et de manière très préférée entre 1,5 et 6% en poids.

La fonction hydro/déshydrogénante métallique peut avantageusement être introduite sur ledit catalyseur par toute méthode connue de l'homme du métier, comme par exemple le comalaxage, l'imprégnation à sec, l'imprégnation par échange. Ledit catalyseur d'hydroisomérisation comprend au moins un support minéral amorphe en tant que fonction hydroisomérisante, ledit un support minéral amorphe étant choisi parmi les silice-alumines et alumines silicées et de manière préférée la silice alumines, contenant une quantité supérieure à 5% poids et inférieure ou égale à 95% poids de silice (SiO₂).

### Etape d) de fractionnement de l'effluent liquide issu de l'étape c)

Conformément à l'étape d) du procédé selon l'invention, l'effluent hydroisomérisé issu de l'étape c) subit une étape de fractionnement, de préférence dans un train de distillation qui intègre une distillation atmosphérique et éventuellement une distillation sous vide, pour obtenir au moins une fraction distillat moyen.

Ladite étape d) a pour but de séparer l'effluent issu de l'étape c) d'hydroisomérisation en au moins une fraction gazeuse comprenant l'hydrogène non converti lors de l'étape c) d'hydroisomérisation, au moins une coupe gazole, au moins une coupe kérosène et au moins une coupe naphta. La valorisation de la coupe naphta n'est pas l'objet de la présente invention, mais cette coupe peut avantageusement être envoyée dans une unité de vapocraquage ou de reformage catalytique.

### EXEMPLES

### Exemple 1 : préparation d'un catalyseur d'hydrotraitement (C1)

Le catalyseur est un catalyseur industriel à base de nickel, molybdène et phosphore sur alumine avec des teneurs en oxyde de molybdène MoO₃ de 16% poids, en oxyde de nickel NiO de 3% poids et en oxyde de phosphore P₂O₅ de 6% poids par rapport au poids total du catalyseur fini, fourni par la société AXENS.

### Exemple 2 : hydrotraitement d'une charge issue de source renouvelable selon un procédé non conforme à l'invention

### Étape a) : hydrotraitement

Dans un réacteur régulé en température de manière à assurer un fonctionnement isotherme et à lit fixe chargé de 110 ml de catalyseur d'hydrotraitement C1, le catalyseur étant préalablement sulfuré, on introduit 92 g/h huile de colza pré-raffiné de densité 920 kg/m³ présentant une teneur en oxygène de 11 % poids et en soufre de 5 ppm poids. L'indice de cétane est de 35 et la distribution en acide gras de l'huile de colza est détaillée dans le tableau 1.

**Tableau 1 : Caractéristiques de l'huile de colza utilisée comme charge pour l'étape a) d'hydrotraitement**

| *Composition en acide gras (%)* | |
|---|---|
| 14:0 | 0,1 |
| 16:0 | 5,0 |
| 16:1 | 0,3 |
| 17:0 | 0,1 |
| 17:1 | 0,1 |
| 18:0 | 1,5 |
| 18:1 trans | <0,1 |
| 18:1 cis | 60,1 |
| 18:2 trans | <0,1 |
| 18:2 cis | 20,4 |
| 18:3 trans | <0,1 |
| 18:3 cis | 9,6 |
| 20:0 | 0,5 |
| 20:1 | 1,2 |
| 22:0 | 0,3 |
| 22:1 | 0,2 |
| 24:0 | 0,1 |
| 24:1 | 0,2 |

700 Nm³ d'hydrogène pur/m³ de charge sont introduits dans le réacteur maintenu à une température de 300°C, à une vitesse spatiale horaire de 1h⁻¹ et à une pression de 5 MPa.

### Étape b) : séparation de l'effluent issu de l'étape a) d'hydrotraitement

La totalité de l'effluent hydrotraité issu de l'étape a) est séparée à l'aide d'un séparateur gaz/liquide de manière à récupérer une fraction légère contenant majoritairement de l'hydrogène, du propane, de l'eau sous forme de vapeur, des oxydes de carbone (CO et CO₂) et de l'ammoniac et un effluent hydrocarboné liquide majoritairement constituée d'hydrocarbures linéaires (Coupe 150+). L'eau présente dans l'effluent hydrocarboné liquide est éliminée par décantation. L'effluent hydrocarboné liquide ainsi obtenue contient une teneur en oxygène atomique inférieure à 80 ppm poids, ladite teneur en oxygène atomique étant mesurée par la technique d'adsorption infra rouge décrite dans la demande de brevet US2009/0018374, et une teneur en soufre de 1 ppm poids et une teneur en azote inférieur à 1 ppm poids.

Les principaux rendements des fractions de l'effluent produit sont reportés dans le tableau 2.

**Tableau 2 : Rendements des fractions réalisées après hydrotraitement sous H₂ pur**

| **Rendements (%pds)** | |
|---|---|
| Eau | 9,3 |
| Gaz | 5,6 |
| C5+ | 85,1 |
| Consommation Hydrogène (%poids/charge) | **3,03** |

### Exemple 3: hydrotraitement d'une charge issue de source renouvelable selon un procédé conforme à l'invention.

Les conditions opératoires de l'étape a) d'hydrotraitement sont identiques à celle décrites à l'exemple 2. Néanmoins, l'hydrogène utilisé dans cette étape présente deux teneurs en monoxyde de carbone de 0,8% et 2% volume en monoxyde de carbone. Le ratio du gaz d'entrée est ajusté de manière à obtenir 700 Nm³ d'hydrogène/m³ de charge. Les autres conditions et l'étape b) sont conservées telles que présentées dans l'exemple 2. Les effluents hydrocarbonés liquides obtenus contiennent une teneur en oxygène atomique inférieure à 80 ppm poids, ladite teneur en oxygène atomique étant mesurée par la technique d'adsorption infra rouge décrite dans la demande de brevet US2009/0018374, et des teneurs en soufre et azote inférieurs à 2 ppm poids.

Les principaux rendements des fractions de l'effluent produit sont reportés dans le tableau 3.

**Tableau 3 : Rendements des fractions réalisées après hydrotraitement avec de l'hydrogène comprenant 0,8 et 2% volume de CO.**

| | | |
|---|---|---|
| **CO Entrée réacteur (%vol)** | 0,80 | 2,00 |

| **Rendements (%pds)** | | |
|---|---|---|
| Eau | 8,7 | 8,1 |
| Gaz | 6,1 | 7,2 |
| C5+ | 85,3 | 84,7 |
| Consommation Hydrogène (%poids/charge) | **3,00** | **2,96** |

Au regard des résultats reportés dans les tableaux 2 et 3, l'ajout de monoxyde de carbone permet non seulement une conversion totale de la charge mais aussi une diminution de la consommation d'hydrogène. Les propriétés de la coupe C5+ restent inchangées.

## Revendications

1. Procédé de production de distillats moyens à partir d'une charge comprenant au moins une fraction de charge issue d'une source renouvelable comprenant au moins:
a) une étape d'hydrotraitement dans laquelle ladite charge est mise en contact avec un catalyseur d'hydrotraitement en lit fixe, ledit catalyseur comprenant une fonction hydro-déshydrogénante et un support amorphe, à une température comprise entre 200 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 70 et 1000 Nm³ d'hydrogène/m³ de charge,
b) une étape de séparation d'au moins une partie de l'effluent issu de l'étape a) en au moins une fraction gazeuse comprenant de l'hydrogène, au moins du CO et du CO₂ et les composés C4⁻, et au moins un effluent liquide hydrocarboné,
c) une étape d'hydroisomérisation d'au moins une partie de l'effluent liquide hydrocarboné séparé de l'étape b), en présence d'un catalyseur d'hydroisomérisation en lit fixe,
d) une étape de fractionnement de l'effluent issu de l'étape c) pour obtenir au moins une fraction distillat moyen,
dans lequel on renvoie dans l'étape a) au moins une partie de la fraction gazeuse séparée à l'étape b), ladite fraction gazeuse renvoyée dans l'étape a) comprenant une teneur en CO comprise entre 0,5 % et 3 % volume,
dans lequel la fraction gazeuse séparée à l'étape b) est recyclée à l'étape a) en même temps qu'un appoint d'hydrogène frais, et
dans lequel la fraction gazeuse totale recyclée combinée à l'appoint d'hydrogène frais comprend une teneur en CO comprise entre 0,5% et 3 % volume.

2. Procédé selon la revendication 1 dans lequel la fraction gazeuse séparée de l'étape b) est soumise à une étape de purification du CO₂ avant d'être recyclée dans l'étape a) d'hydrotraitement.

3. Procédé selon l'une des revendications 1 à 2 dans lequel la charge issue de sources renouvelables est choisie parmi les huiles et graisses d'origine végétale ou animale, ou des mélanges de telles charges, contenant des triglycérides et/ou des acides gras libres et/ou des esters.

4. Procédé selon l'une des revendications 1 à 3 dans lequel la charge comprend en outre au moins une fraction de charge hydrocarbonée.

5. Procédé selon l'une des revendications 1 à 4 dans lequel la charge est mise au contact d'un catalyseur en lit fixe à une température comprise 220 et 350°C, une pression est comprise entre 1 MPa et 6 MPa, une vitesse spatiale horaire comprise entre 0,1 h⁻¹ et 10 h⁻¹, en présence d'une quantité totale d'hydrogène mélangée à la charge telle que le ratio hydrogène/charge soit compris entre 150 et 750 Nm³ d'hydrogène/m³ de charge.

6. Procédé selon l'une des revendications 1 à 5 dans lequel, le catalyseur d'hydrotraitement mis en œuvre à l'étape a) comprend une fonction hydro-déshydrogénante comprenant au moins un métal du groupe VIII et/ou du groupe VIB, pris seul ou en mélange et un support choisi dans le groupe formé par l'alumine, la silice, les silices-alumines, la magnésie, les argiles et les mélanges d'au moins deux de ces minéraux.

7. Procédé selon l'une des revendications 1 à 6 dans lequel l'étape b) de séparation est mise en œuvre par la combinaison de un ou plusieurs séparateurs haute et/ou basse pression et/ou d'étapes de distillation et/ou de strippage haute et/ou basse pression.

8. Procédé selon l'une des revendications 1 à 7 dans lequel l'étape c) est effectuée à une température comprise entre 150 et 500°C, à une pression comprise entre 1 MPa et 10 MPa, à une vitesse spatiale horaire comprise entre 0,1 et 10 h⁻¹ et en présence d'une quantité totale d'hydrogène mélangée à la charge telle que le ratio hydrogène/charge soit compris entre 70 et 1000 Nm³/m³ de charge.

9. Procédé selon la revendication 8 dans lequel l'hydrogène utilisé à l'étape c) est de l'hydrogène frais ou de l'hydrogène de recyclage non converti lors de l'étape c) d'hydroisomérisation et séparé à l'étape de fractionnement d) ou leur mélange.

10. Procédé selon la revendication 8 dans lequel l'hydrogène utilisé à l'étape c) provient d'au moins une partie de la fraction gazeuse séparée à l'étape b).

11. Procédé selon l'une des revendications précédentes dans lequel, la charge subit préalablement à l'étape a), une étape de pré-traitement ou pré-raffinage.

## Patentansprüche

1. Verfahren zur Erzeugung von Mitteldestillaten aus einem Ausgangsmaterial, umfassend mindestens eine Fraktion des Ausgangsmaterials, die von einer erneuerbaren Quelle stammt, mindestens umfassend:
a) einen Schritt der Hydrobehandlung, in dem das Ausgangsmaterial mit einem Katalysator zur Hydrobehandlung im Festbett in Kontakt gebracht wird, wobei der Katalysator eine hydrierend-dehydrierende Funktion und einen amorphen Träger umfasst, bei einer Temperatur zwischen 200 und 450°C, bei einem Druck zwischen 1 MPa und 10 MPa, bei einer Stundenraumgeschwindigkeit zwischen 0,1 h⁻¹ und 10 h⁻¹ und im Beisein einer Gesamtmenge an Wasserstoff, die mit dem Ausgangsmaterial gemischt wird, so dass das Verhältnis Wasserstoff/Ausgangsmaterial zwischen 70 und 1000 Nm³ Wasserstoff/m³ Ausgangsmaterial beträgt,
b) einen Schritt der Trennung mindestens eines Teils des aus Schritt a) kommenden Abflusses in mindestens eine gasförmige Fraktion, umfassend Wasserstoff, mindestens CO und CO₂ und die Verbindungen C4', und mindestens einen kohlenwasserstoffhaltigen flüssigen Abfluss,
c) einen Schritt der Hydroisomerisation mindestens eines Teils des getrennten kohlenwasserstoffhaltigen flüssigen Abflusses aus Schritt b) im Beisein eines Hydroisomerisations-Katalysators im Festbett,
d) einen Schritt der Fraktionierung des Abflusses aus Schritt c), um mindestens eine Mitteldestillatfraktion zu erhalten,
bei dem mindestens ein Teil der in Schritt b) abgetrennten gasförmigen Fraktion in Schritt a) zurückgeführt wird, wobei die in Schritt a) zurückgeschickte gasförmige Fraktion einen Gehalt an CO zwischen 0,5 Vol.-% und 3 Vol.-% umfasst,
bei dem die in Schritt b) abgetrennte gasförmige Fraktion zur gleichen Zeit wie ein Zusatz von frischem Wasserstoff in Schritt a) zurückgeführt wird und
bei dem die gesamte zurückgeführte gasförmige Fraktion kombiniert mit dem Zusatz von frischem Wasserstoff einen Gehalt an CO zwischen 0,5 Vol.-% und 3 Vol.-% aufweist.

2. Verfahren nach Anspruch 1, bei dem die abgetrennte gasförmige Fraktion aus Schritt b) einem CO₂ Reinigungsschritt unterzogen wird, bevor sie in den Schritt a) der Hydrobehandlung zurückgeführt wird.

3. Verfahren nach einem der Ansprüche 1 bis 2, bei dem das von erneuerbaren Quellen kommende Ausgangsmaterial unter den Ölen und Fetten pflanzlichen oder tierischen Ursprungs oder Gemischen solcher Ausgangsmaterialien ausgewählt ist, die Triglyceride und/oder freie Fettsäuren und/oder Ester enthalten.

4. Verfahren nach einem der Ansprüche 1 bis 3, bei dem das Ausgangsmaterial ferner mindestens eine kohlenwasserstoffhaltige Ausgangsmaterialfraktion umfasst.

5. Verfahren nach einem der Ansprüche 1 bis 4, bei dem das Ausgangsmaterial mit einem Katalysator im Festbett in Kontakt gebracht wird, bei einer Temperatur zwischen 220 und 350°C, bei einem Druck zwischen 1 MPa und 6 MPa, bei einer Stundenraumgeschwindigkeit zwischen 0,1 h⁻¹ und 10 h⁻¹ und im Beisein einer Gesamtmenge an Wasserstoff, die mit dem Ausgangsmaterial gemischt wird, so dass das Verhältnis Wasserstoff/Ausgangsmaterial zwischen 150 und 750 Nm³ Wasserstoff/m³ Ausgangsmaterial beträgt.

6. Verfahren nach einem der Ansprüche 1 bis 5, bei dem der in Schritt a) eingesetzte Katalysator zur Hydrobehandlung eine hydrierend-dehydrierende Funktion aufweist, umfassend mindestens ein Metall der Gruppe VIII und/oder der Gruppe VIB alleine oder im Gemisch und einen Träger, der ausgewählt ist in der Gruppe, die von Aluminiumoxid, Siliziumdioxid, den Siliziumdioxiden-Aluminiumoxiden, Magnesiumoxid, Ton und den Gemischen von mindestens zweien dieser Mineralien gebildet ist.

7. Verfahren nach einem der Ansprüche 1 bis 6, bei dem der Schritt b) der Trennung durch die Kombination eines oder mehrerer Hoch- und/oder Niederdruck-Separatoren und/oder von Destillations- und/oder Hoch- und/oder Niederdruck-Strippingschritten umgesetzt wird.

8. Verfahren nach einem der Ansprüche 1 bis 7, bei dem der Schritt c) bei einer Temperatur zwischen 150 und 500 °C, bei einem Druck zwischen 1 MPa und 10 MPa, bei einer Stundenraumgeschwindigkeit zwischen 0,1 und 10 h⁻¹ und im Beisein einer Gesamtmenge an Wasserstoff, der mit dem Ausgangsmaterial derart gemischt ist, dass das Verhältnis Wasserstoff/Ausgangsmaterial zwischen 70 und 1000 Nm³/m³ Ausgangsmaterial beträgt, durchgeführt wird.

9. Verfahren nach Anspruch 8, bei dem der in Schritt c) verwendete Wasserstoff frischer Wasserstoff oder Recycling-Wasserstoff, der in Schritt c) der Hydroisomerisation nicht konvertierte und in dem Fraktionierungsschritt d) abgetrennt wurde, oder ihr Gemisch ist.

10. Verfahren nach Anspruch 8, bei dem der in Schritt c) verwendete Wasserstoff zumindest teilweise von der in Schritt b) abgetrennten gasförmigen Fraktion stammt.

11. Verfahren nach einem der vorhergehenden Ansprüche, bei dem das Ausgangsmaterial vor dem Schritt a) einem Schritt der Vorbehandlung oder Vorraffination unterzogen wird.

## Claims

1. A process for the production of middle distillates starting from a feed comprising at least one fraction of a feed obtained from a renewable source, comprising at least:
a) a hydrotreatment step in which said feed is brought into contact with a fixed bed of hydrotreatment catalyst, said catalyst comprising a hydrodehydrogenating function and an amorphous support, at a temperature in the range 200°C to 450°C, at a pressure in the range 1 MPa to 10 MPa, at an hourly space velocity in the range 0.1 h⁻¹ to 10 h⁻¹ and in the presence of a total quantity of hydrogen mixed with the feed such that the hydrogen/feed ratio is in the range 70 to 1000 Nm³ of hydrogen/m³ of feed;
b) a step for separation of at least a portion of the effluent obtained from step a) into at least one gaseous fraction comprising hydrogen, at least CO and CO₂ and C4⁻compounds, and at least one liquid hydrocarbon effluent;
c) a step for hydroisomerization of at least a portion of the liquid hydrocarbon effluent separated in step b), in the presence of a fixed bed of hydroisomerization catalyst;
d) a step for fractionation of the effluent obtained from step c) in order to obtain at least one middle distillate fraction;
in which at least a portion of the gaseous fraction separated in step b) is returned to step a), said gaseous fraction returned to step a) comprising a quantity of CO in the range 0.5% to 3% by volume,
in which the gaseous fraction separated in step b) is recycled to step a) at the same time as a makeup of fresh hydrogen, and
in which the total gaseous fraction recycled combined with the makeup of fresh hydrogen comprises a quantity of CO in the range 0.5% to 3% by volume.

2. The process according to claim 1, in which the gaseous fraction separated in step b) undergoes a step for purification of CO₂ before being recycled to the hydrotreatment step a).

3. The process according to one of claims 1 to 2, in which the feed obtained from the renewable sources is selected from oils and fats of vegetable or animal origin or mixtures of said feeds containing triglycerides and/or free fatty acids and/or esters.

4. The process according to one of claims 1 to 3, in which the feed further comprises at least one hydrocarbon feed fraction.

5. The process according to one of claims 1 to 4, in which the feed is brought into contact with a fixed bed of catalyst at a temperature in the range 220°C to 350°C, a pressure in the range 1 MPa to 6 MPa, an hourly space velocity in the range 0.1 h⁻¹ to 10 h⁻¹, in the presence of a total quantity of hydrogen mixed with the feed such that the hydrogen/feed ratio is in the range 150 to 750 Nm³ of hydrogen/m³ of feed.

6. The process according to one of claims 1 to 5, in which the hydrotreatment catalyst employed in step a) comprises a hydrodehydrogenating function comprising at least one metal from group VIII and/or metal from group VIB, used alone or as a mixture, and a support selected from the group formed by alumina, silica, silica-aluminas, magnesia, clays and mixtures of at least two of these minerals.

7. The process according to one of claims 1 to 6, in which the separation step b) is carried out by combining one or more high and/or low pressure separators and/or distillation steps and/or high and/or low pressure stripping steps.

8. The process according to one of claims 1 to 7, in which step c) is carried out at a temperature in the range 150°C to 500°C, at a pressure in the range 1 MPa to 10 MPa, at an hourly space velocity in the range 0.1 to 10 h⁻¹ and in the presence of a total quantity of hydrogen mixed with the feed such that the hydrogen/feed ratio is in the range 70 to 1000 Nm³/m³ of feed.

9. The process according to claim 8, in which the hydrogen used in step c) is fresh hydrogen or a recycle of hydrogen which has not being converted during the hydroisomerization step c) and separated in the fractionation step d), or a mixture thereof.

10. The process according to claim 8, in which the hydrogen used in step c) derives at least in part from the gaseous fraction separated in step b).

11. The process according to one of the preceding claims in which, prior to step a), the feed undergoes a step for pre-treatment or pre-refining.
